# EUROPEAN PATENT APPLICATION

(11) **EP 4 318 851 A1**
(43) Date of publication of application: **07.02.2024**
(21) Application number: 21937240.6
(22) Date of filing: 19.04.2021
(51) Int. Cl.: H02J 7/00, H05K 7/20

(54) **LIQUID-COOLED CHARGING DEVICE AND CHARGING GUN**

(71) Applicant: Zhejiang Geely Holding Group Co., Ltd., Hangzhou, Zhejiang 310051 (CN); Geely Automobile Research Institute (Ningbo) Co., Ltd, Ningbo, Zhejiang 315336 (CN)
(72) Inventor: HE, Yingyong, Ningbo, Zhejiang 315336 (CN); YANG, Kang, Ningbo, Zhejiang 315336 (CN); DAI, Lizhu, Ningbo, Zhejiang 315336 (CN); WANG, Qiang, Ningbo, Zhejiang 315336 (CN); JI, Ke, Ningbo, Zhejiang 315336 (CN); SHI, Zhichao, Ningbo, Zhejiang 315336 (CN)
(74) Representative: Kraus & Lederer Patentanwälte PartGmbB
(86) International application number: PCT/CN2021/088119
(87) International publication number: WO 2022/221989

(57) **Abstract**

Provided is a liquid-cooled charging device, relating to the technical field of vehicle charging. The liquid-cooled charging device includes a charging base (1), a cooling assembly (2), and at least one wiring terminal (3). The cooling assembly (2) has a cooling flow channel (211) and at least one mounting hole (212). The cooling flow channel (211) is formed inside the cooling assembly (2) and surrounds the at least one mounting hole (212). The least one wiring terminal (3) has an end inserted into the charging base (1) and another end inserted into the at least one mounting hole (212), enabling the at least one wiring terminal (3) to be cooled by the cooling assembly (2). By providing the cooling assembly (2) on the charging base (1) and cooling the wiring terminal (3) by the cooling assembly (2), it is possible to realize that cooling of the cooling assembly (2) and charging of the wiring terminal (3) are independently operated without mutual interference, and thus safety of high-power charging environment is improved. In addition, it is possible to realize that a small cable carries large currents, resulting in faster charging and more convenient use. Therefore, user experience is greatly improved. A charging gun is also provided.

## Description

### FIELD

The present disclosure relates to the technical field of vehicle charging, and in particular, to a liquid-cooled charging device and a charging gun.

### BACKGROUND

With the social development and the continuous improvement of people's living standards, the automobile industry has experienced rapid growth in China in recent years. However, the automobile industry also brings severe dual challenges in energy and environment to society while driving economic and cultural high-speed advancement. Therefore, energy conservation and environmental protection become important issues in the development of automobile technology, leading to the emergence and breakthrough development of new energy vehicles. However, the most noticeable challenge for users is slow charging. The charging technology, as one of the key technical difficulties, impacts and hinders the further development of new energy vehicles. To address this problem, domestical and international researchers have researched the application of oil cooling technology to achieve high-power charging technology.

In order to achieve higher charging current and enable fast charging in a safe manner, the charging gun in the related art requires reduction in resistance of the charging gun, i.e., resistance of charging cable itself. An electrical resistivity is proportional to a temperature of a conductor so that the resistance of the charging cable can be lowered by decreasing a temperature of the charging cable or increasing a cross-sectional area of the charging cable. Moreover, a temperature of the charging gun is reduced by reducing the resistance of the charging gun. In addition, the charging current is increased by increasing the cross-sectional area of the charging cable. In this way, the charging cable is thick and bulky, making the charging gun cumbersome and difficult to handle. Moreover, significant heat generation in various parts of the charging gun may be caused by an increase in current, making it difficult to achieve fast charging while ensuring safety. In the related art, a cooling structure is employed to dissipate heat from the charging gun. However, formation of a complex water path within a limited space of the charging gun itself also rises the difficulty of a manufacturing process of the charging gun, making it challenging to implement such cooling methods.

Considering the defects in the related art, it is urgent to research a liquid-cooled charging device and a charging gun to solve the above problems.

### SUMMARY

To solve the above technical problems, the present disclosure provides a liquid-cooled charging device and a charging gun. According to the present disclosure, a cooling assembly is disposed on a charging base, and a wiring terminal is cooled by the cooling assembly, which realizes that cooling of the cooling assembly and charging of the wiring terminal are independently operated without mutual interference, and enhances safety of high-power charging environment. Moreover, it may realize that a small cable carries large current, resulting in faster charging and more convenient use. Therefore, user experience is greatly improved.

The present disclosure discloses a liquid-cooled charging device. The liquid-cooled charging device includes a charging base, a cooling assembly mounted on the charging base, and at least one wiring terminal. The cooling assembly has a cooling flow channel and at least one mounting hole, and the cooling flow channel is formed inside the cooling assembly and surrounds the at least one mounting hole. The at least one wiring terminal has an end inserted into the charging base and another end inserted into the at least one mounting hole, enabling the at least one wiring terminal to be cooled by the cooling assembly.

Further, the cooling assembly includes a cooling cover and a cooling tank having an end connected to the charging base and another end connected to the cooling cover. The cooling flow channel and the at least one mounting hole are defined on the cooling tank.

Further, the cooling assembly includes a cooling tank, a cooling cover, and an insulation casing. The cooling flow channel and the at least one mounting hole are defined on the cooling tank. The insulation casing includes a first insulation housing and at least one second insulation housing, the first insulation housing is configured to insulate the cooling tank from an external conductor, and the at least one second insulation housing is configured to insulate the cooling tank from the at least one wiring terminal. The first insulation housing is arranged around the at least one second insulation housing and the cooling tank, and the at least one second insulation housing is disposed in the at least one mounting hole.

Further, the number of the at least one second insulation housing corresponds to the number of the at least one mounting hole, and one of the at least one second insulation housing is arranged in each of the at least one mounting hole.

Further, a high thermally conductive filler is disposed in a gap between the at least one wiring terminal and the cooling tank, and the at least one wiring terminal is configured to transfer heat to the cooling tank through the high thermally conductive filler.

Further, the number of the at least one mounting hole corresponds to the number of the at least one wiring terminal. The cooling assembly has two mounting holes arranged on the cooling tank and spaced apart from each other, and the liquid-cooled charging device includes two wiring terminals.

Further, the cooling cover has a shape matching with a sectional shape of the cooling flow channel. The cooling tank is sealingly connected to the cooling cover, enabling the cooling cover to seal the cooling flow channel.

Further, the cooling flow channel is formed along a side wall of the cooling tank, and has a water inlet and a water outlet.

Further, the cooling cover is provided with a water inlet pipe and a water outlet pipe, and the water inlet pipe and the water outlet pipe are in no communication with each other. The water inlet pipe is in communication with the water inlet, and the water outlet pipe is in communication with the water outlet.

Further, each of the two wiring terminals includes a connection portion and a welding portion. The connection portion has an end connected to an end of the welding portion and another end inserted into the charging base, and the welding portion has another end configured to be connected to an external cable.

Further, an axial direction of each of the two mounting holes is consistent with each of a height direction of the cooling tank and a depth direction of the cooling flow channel.

Further, the cooling assembly is in a splayed-like shape.

Further, the side wall of the cooling tank includes a bottom plate, an inner wall, and an outer wall, An end of the inner wall and an end of the outer wall are both arranged at the bottom plate, the cooling flow channel is defined between the inner wall and the outer wall and has an open end, and the cooling cover is disposed at the open end of the cooling flow channel.

In another aspect, the present disclosure provides a charging gun including the liquid-cooled charging device as described above.

According to embodiments of the present disclosure, the following advantageous effects are provided below.

According to the present disclosure, the cooling assembly is disposed on the charging base, and the wiring terminal is cooled by the cooling assembly, which realizes that the cooling of the cooling assembly and the charging of the wiring terminal are independently operated without mutual interference, and enhances the safety of the high-power charging environment. Moreover, it may realize that the small cable carries large current, resulting in faster charging and more convenient use. Therefore, the user experience is greatly improved.

### BRIEF DESCRIPTION OF THE DRAWINGS

In order to describe the technical solutions of the present disclosure more clearly, the accompanying drawings that need to be used in the description of the embodiments or the related art will be discussed briefly below. Obviously, the accompanying drawings described below are only some embodiments of the present disclosure. For those skilled in the art, other drawings can be obtained based on these drawings without involving inventive efforts.
FIG. 1 is a sectional view of a liquid-cooled charging device according to an embodiment.
FIG. 2 is a top view of a liquid-cooled charging device according to an embodiment.
FIG. 3 is a structural view after a cooling tank is connected to a cooling cover according to an embodiment.
FIG. 4 is a structural view of a cooling tank and a cooling cover according to an embodiment.
FIG. 5 is a structural view of a cooling tank according to an embodiment.
FIG. 6 is a structural view of a cooling assembly according to an embodiment.
FIG. 7 is a structural view of a wiring terminal according to an embodiment.

Herein, reference signs in the drawings are described below.
1 charging base;
2 cooling assembly, 21 cooling tank, 22 cooling cover, 23 insulation casing, 211 cooling flow channel, 212 mounting hole, 213 inner wall, 214 outer wall, 221 water inlet pipe, 222 water outlet pipe, 231 first insulation housing, 232 second insulation housing, 2111 water inlet, 2112 water outlet;
3 wiring terminal, 31 connection portion, 32 welding portion.

### DETAILED DESCRIPTION

Technical solutions according to embodiments of the present disclosure will be clearly and completely described below in combination with the accompanying drawings of the embodiments of the present disclosure. Obviously, the embodiments described below are only a part, rather than all, of the embodiments of the present disclosure. On a basis of the embodiments in the present disclosure, all other embodiments obtained by those skilled in the art without involving creative effort shall fall within the scope of the present disclosure.

It should be noted that in the specification and claims of the present disclosure and the accompanying drawings, terms such as "first" and "second" are used to distinguish similar objects, rather than to describe a specific sequence or order. It should be understood that these sequence numbers can be interchanged with each other under appropriate circumstances, such that the described embodiments of the present disclosure can be implemented in a sequence other than those illustrated in the figures or described in the present disclosure. In addition, terms "include", "have" and any variations thereof are intended to cover non-exclusive inclusions. For example, a process, method, system, product or device that includes a series of steps or units is not necessarily limited to those clearly listed steps or units, but may include other steps or units that are not clearly listed or are inherent to the process, method, product, or device.

The related art has the following disadvantages. In order to achieve higher charging current and enable fast charging in a safe manner, the charging gun in the related art reduces its temperature by decreasing its resistance. Moreover, the charging current can be increased by increasing a cross-sectional area of a charging cable. In this way, the charging cable is thick and bulky, making the charging gun cumbersome and difficult to handle. Moreover, significant heat generation in various parts of the charging gun may be caused by increase in current, making it difficult to achieve fast charging while ensuring safety. In the related art, a cooling structure is also employed to dissipate heat from the charging gun. However, formation of a complex water path within a limited space of the charging gun itself may rise the difficulty of a manufacturing process of the charging gun, making it challenging to implement such cooling methods.

Aiming at the defects in the related art, according to the present disclosure, a cooling assembly is disposed on a charging base, and a wiring terminal is cooled through the cooling assembly, which realizes that cooling of the cooling assembly and charging of the wiring terminal are independently operated and do not interfere with each other, and enhances safety of high-power charging environment. Moreover, it may realize that a small cable carries large current, resulting in faster charging and more convenient use. Therefore, user experience is greatly improved.

### Embodiment 1

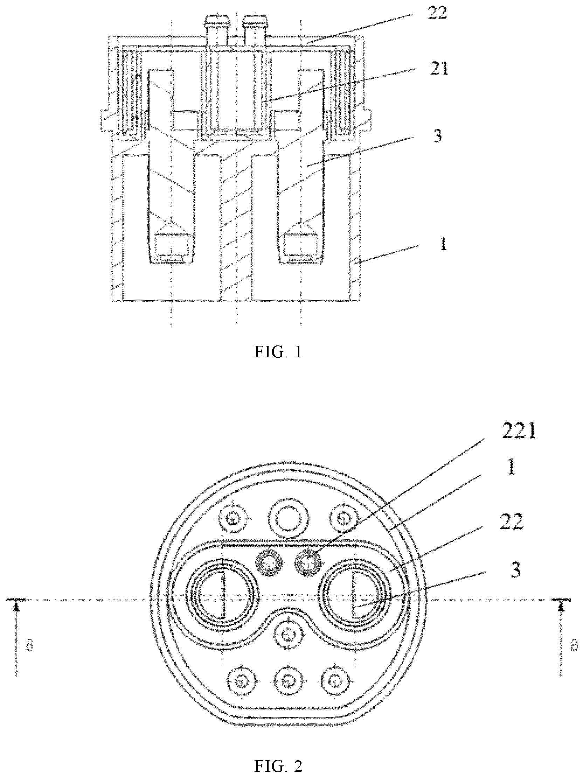

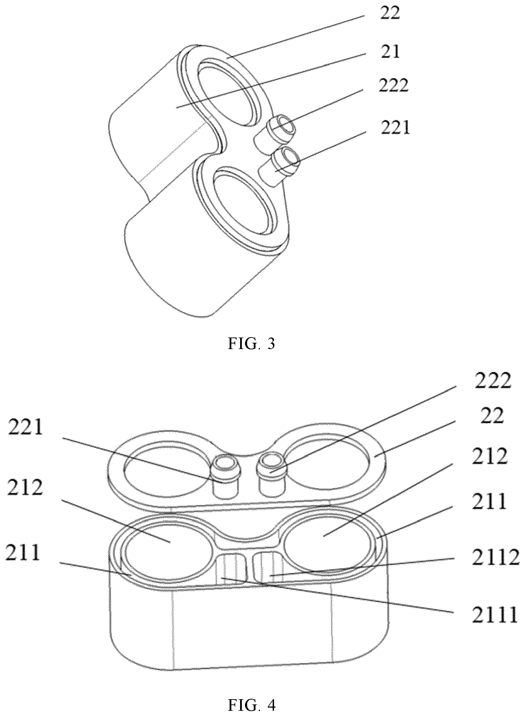

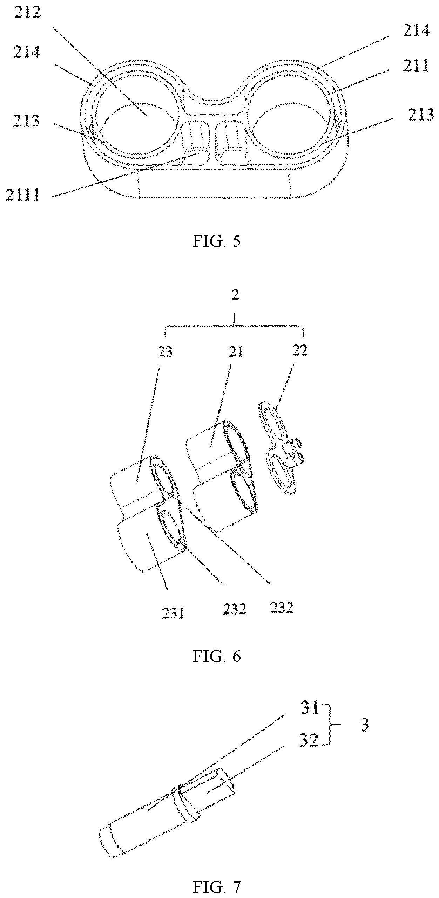

As illustrated in FIG. 1 to FIG. 7, a liquid-cooled charging device is provided in this embodiment. The liquid-cooled charging device includes a charging base 1, a cooling assembly 2 mounted on the charging base 1, and at least one wiring terminal 3. The cooling assembly 2 has a cooling flow channel 211 and at least one mounting hole 212, and the cooling flow channel 211 is formed inside the cooling assembly 2 and surrounds the at least one mounting hole 212. The at least one wiring terminal 3 has an end inserted into the charging base 1 and another end inserted into the at least one mounting hole 212, enabling the at least one wiring terminal 3 to be cooled by the cooling assembly 2.

It should be noted that although the charging current can be increased by increasing the cross-sectional area of the charging cable in the related art, it easily causes the charging gun to be cumbersome and not easy to be manipulated. In this embodiment, the cooling assembly 2 is disposed on the charging base 1, and the wiring terminal 3 is cooled by the cooling assembly 2, which realizes that the cooling of the cooling assembly 2 and the charging of the wiring terminal 3 independently operate without interfering with each other. Moreover, the wiring terminal is synchronously and circularly cooled during the charging process of the wiring terminal. Therefore, the problem of forming a bulky and unwieldy charging gun is avoided by means of a high-power supercharging function of the water cooling technology. In addition, the cooling assembly 2 in this embodiment is simple in structure, which prevents an arrangement of a complex cooling assembly 2 to increase manufacturing difficulties in the liquid-cooled charging device.

It should also be noted that a cross-sectional view of FIG. 1 is obtained by cutting the liquid-cooled charging device along B-B direction in FIG. 2.

In some embodiments, the charging base 1 has at least one accommodation groove, and the number of at least one accommodation groove is equal to the number of the at least one wiring terminal 3. One of the at least one wiring terminal 3 is arranged in each of the at least one accommodation groove.

In some embodiments, the at least one wiring terminal 3 has an end inserted into the at least one accommodation groove and another end inserted into the at least one mounting hole 212.

In an embodiment, a high thermally conductive filler is disposed in a gap between the at least one wiring terminal and the cooling tank 22, and the at least one wiring terminal 3 is configured to transfer heat to the cooling tank 22 through the high thermally conductive filler.

In some embodiments, the high thermal conductivity filler is thermally conductive silica gel, thermally conductive silicone grease, or the like.

In some embodiments, when the cooling tank 21 is made of material such as aluminum oxide ceramic, beryllium oxide, aluminum nitride, or boron nitride, an insulation casing 23 is not required to be provided.

In an embodiment, the cooling assembly 2 includes a cooling cover 22 and a cooling tank 21 having an end connected to the charging base 1 and another end connected to the cooling cover 22. The cooling flow channel 211 and the at least one mounting hole 212 are defined on the cooling tank 21.

In some embodiments, when the cooling tank 21 is made of a metal aluminum alloy material, it is necessary to provide the insulation casing 23 to prevent the cooling tank 21 from conducting electricity to an external conductor and the at least one wiring terminal 3, respectively. Therefore, operation safety of the liquid-cooled charging device may not be ensured.

In an embodiment, the cooling assembly 2 includes a cooling tank 21, a cooling cover 22, and an insulation casing 23. The cooling flow channel 211 and the at least one mounting hole 212 are defined on the cooling tank 21. The insulation casing 23 includes a first insulation housing 231 and at least one second insulation housing 232. The first insulation housing 231 is configured to insulate the cooling tank 21 from an external conductor. The at least one second insulation housing 232 is configured to insulate the cooling tank 21 from the at least one wiring terminal 3. The first insulation housing 231 is arranged around the second insulation housing 232 and arranged around the cooling tank 21, and the at least one second insulation housing 232 is disposed in the at least one mounting hole 212.

In some embodiments, the insulation casing 23 further includes a fixation plate. An end of the first insulation plate 231 and an end of the at least one second insulation housing 232 are both fixed at the fixation plate.

In some embodiments, the first insulation housing 231 has a shape matching with a shape of the cooling tank 21, enabling spacings between the first insulation housing 231 and the cooling tank 21 at arbitrary positions to be equal when the first insulation housing 231 is arranged around the cooling tank 21. The at least one second insulation housing 232 has a shape same as a shape of the at least one mounting hole. The at least one second insulation housing 232 is in a cylindrical shape, and has a diameter smaller than that of the at least one mounting hole 212, which enables the at least one mounting hole 212 to be arranged around an outer side of the at least one second insulation housing 232. In this way, the cooling tank 21 is separated from the at least one wiring terminal 3. The cooling tank is prevented from being electrically conductive with the at least one wiring terminal, thereby avoiding influence on normal charging of the vehicle by the liquid-cooled charging device.

In an embodiment, the number of the at least one second insulation housing 232 corresponds to the number of the at least one mounting hole 212, and one of the at least one second insulation housing 232 is arranged in each of the at least one mounting hole 212.

In some embodiments, two second insulation housings 232 are provided. When the first insulation housing 231 is arranged around the cooling tank 21, the second insulation housings 232 are disposed in the mounting holes 212, and an axis of one of the second insulation housings 232 coincides with an axis of each of the mounting holes 212.

In an embodiment, the number of the mounting holes 212 corresponds to the number of the wiring terminals 3, and two mounting holes 212 and two wiring terminals 3 are provided. The two mounting holes 212 are arranged on the cooling tank 21 and spaced apart from each other.

In an embodiment, the cooling cover 22 has a shape matching with a sectional shape of the cooling flow channel 211. The cooling tank 21 is sealingly connected to the cooling cover 22, enabling the cooling cover 22 to seal the cooling flow channel 211.

In some embodiments, a water inlet 2111 and a water outlet 2112 are spaced apart from each other. A water inlet pipe 221 and a water outlet pipe 222 are spaced apart from each other, and are disposed at a same side of the cooling cover 22.

In an embodiment, the cooling flow channel 211 is formed along a side wall of the cooling tank 21, and includes the water inlet 2111 and the water outlet 2112. Specifically, the cooling flow channel 211 in this embodiment has a simple structure, which can prevent a cooling water path with a complex design from increasing the difficulty of the manufacturing process of the charging gun and improving the production cost.

In some embodiments, the arrangement direction of the water inlet 2111 and the arrangement direction of the water outlet 2112 are consistent with an axial direction of the at least one mounting hole 212, enabling the water inlet pipe 221 and the water outlet pipe 222 to be disposed on the cooling cover 22.

In other embodiments, the water inlet 2111 and the water outlet 2112 are disposed on the side wall of the cooling tank 21. The water inlet pipe 221 is configured to be in communication with the water inlet 2111, and the water outlet pipe 222 is configured to be in communication with the water outlet 2112. The position of the water inlet pipe 221 and the position of the water outlet pipe 222 are not limited.

In an embodiment, the cooling cover 22 has a water inlet pipe 221 and a water outlet pipe 222. The water inlet pipe 221 and the water outlet pipe 222 are in no communication with each other, the water inlet pipe 221 is in communication with the water inlet 2111, and the water outlet pipe 222 is in communication with the water outlet 2112.

In some embodiments, the water inlet pipe 221 and the water outlet pipe 222 of the cooling cover 22 are both in communication with an external cooling system, enabling water in the cooling flow channel 211 to flow into the external cooling system. Moreover, cold water in the external cooling system can enter the cooling flow channel.

In an embodiment, each of the at least one wiring terminal 3 includes a connection portion 31 and a welding portion 32. The connection portion 31 has an end connected to an end of the welding portion 32 and another end inserted into the charging base 1, and the welding portion 32 has another end configured to be connected to an external cable.

In an embodiment, an axial direction of the at least one mounting hole 212 is consistent with a height direction of the cooling tank 21 and a depth direction of the cooling flow channel 211.

In some embodiments, the wiring terminal 3 further includes an engagement portion. The engagement portion is disposed at a connection position between the connection portion 31 and the welding portion 32.

In some embodiments, the cooling tank 21 and the cooling flow channel 211 are integrally formed.

In some embodiments, the welding portion 32 is configured to be connected to the external cable by a spot-welding device in a welding form, to lower a resistance connection effect. The cooling tank 21 and the cooling tank 22 are disposed in the insulation casing 23 after being spot-welded or mechanical sealed. The first insulation housing 231 is configured to provide insulation between the cooling tank 21 and a conductor outside the liquid-cooled charging device, and functions to heat conduction. The at least one second insulation housing 232 is configured to insulate the cooling tank 21 from the at least one wiring terminal 3 in the liquid-cooled charging device, and functions to heat conduction.

In some embodiments, a cross section of the welding portion 32 is in a semicircular shape. The engagement portion is of a circular ring structure. The connection portion 31 is of a cylindrical structure. Moreover, a diameter of the engagement portion is greater than a diameter of the connection portion 31.

In other embodiments, a section of the accommodation groove is in a circular shape, and the diameter of the engagement portion is greater than a diameter of the accommodation groove.

A mounting process of the liquid-cooled charging device is as follows. When the liquid-cooled charging device needs to be mounted, the connection portion 31 is firstly inserted into the accommodation groove, and the engagement portion is engaged with the charging base, such that the welding portion 32 cannot enter the accommodation groove. The cooling tank 21 is then arranged around the at least one wiring terminal, and is welded and fixed to the charging base 1. Finally, the cooling cover 22 is welded and fixed to the cooling tank 21, to seal the cooling flow channel. In this case, the mounting of the liquid-cooled charging device is completed.

In an embodiment, the cooling assembly 2 is in a splayed-like shape.

In an embodiment, the side wall of the cooling tank 21 includes a bottom plate, an inner wall 213, and an outer wall 214. An end of the inner wall 213 and an end of the outer wall 214 are both arranged at the bottom plate. The cooling flow channel 211 is defined between the inner wall 213 and the outer wall 214 and has an open end, and the cooling cover 22 is disposed at the open end of the cooling flow channel 211.

In some embodiments, the bottom plate is welded and fixed to the inner wall 213 and the outer wall 214, respectively.

In some embodiments, the outer wall 214 has a shape same as a shape of the first insulation housing 231. The inner wall 213 is also in a splayed-like shape.

In some embodiments, the inner wall 213 includes a first inner wall, a second inner wall, a third inner wall, and a fourth inner wall. The first inner wall and the second inner wall have the same shape, and are both cylindrical housings. The third inner wall is connected to the first inner wall and the second inner wall. The fourth inner wall is connected to the third inner wall and the outer wall 214, and the fourth inner wall is connected to the third inner wall and the outer wall 214. Therefore, the water inlet 2111 and the water outlet 2112 are formed.

In some embodiments, the liquid-cooled charging device can achieve high-power charging, which is described in detail below. The cooling tank 21 surrounds or semi-surrounds the at least one wiring terminal 3. During the charging of the liquid-cooled charging device, the at least one wiring terminal 3 of the liquid-cooled charging device is connected to a vehicle charging base to form a high-voltage and large-current charging circuit. The cooling flow channel 211 in the cooling tank 21 forms a water circulation circuit. Heat generated by the t least one wiring terminal 3 during the charging is transferred to the cooling tank 21 through the high thermal conductivity filler, and is carried away through the water circulation circuit to form continuous cooling, which realizes that the charging circuit and the water circulation circuit are independently operated without mutual interference, and assures safety of the charging environment while achieving rapid charging.

Another aspect of the present disclosure provides a charging gun including the liquid-cooled charging device as described above. With the charging gun having the liquid-cooled charging device, the cooling assembly 2 is disposed on the charging base 1, and the at least one wiring terminal 3 is cooled by the cooling assembly 2, which realizes that the cooling of the cooling assembly 2 and the charging of the wiring terminal 3 are independently operated without mutual interference, and enhances the safety of the high-power charging environment. Moreover, it may realize that the small cable carries large current, resulting in faster charging and more convenient use. Therefore, the user experience is greatly improved.

Although the present disclosure has been described with preferred embodiments, the present disclosure is not limited to the embodiments described herein. Various modifications and variations may be made without departing from the scope of the present disclosure.

In this context, the related terms, such as front, rear, above, below and the like, are defined by positions of components in the drawings and their relation to each other. These terms are merely for clarity and convenience of expression of the technical solutions. It should be understood that the use of these directional terms shall not limit the scope of the present disclosure.

It should be noted that the embodiments of the present disclosure and the features disclosed in the embodiments of the present disclosure can be combined with each other without conflicting.

What is disclosed above is only a preferred embodiment of the present disclosure, and the scope of the present disclosure should not be limited thereto. Therefore, any equivalent modification made according to the claims of the present disclosure are still within the scope covered by the present disclosure.

## Claims

1. A liquid-cooled charging device, comprising:
a charging base (1);
a cooling assembly (2) mounted on the charging base (1), the cooling assembly (2) having a cooling flow channel (211) and at least one mounting hole (212), the cooling flow channel (211) being formed inside the cooling assembly (2) and surrounding the at least one mounting hole (212); and
at least one wiring terminal (3) having an end inserted into the charging base (1) and another end inserted into the at least one mounting hole (212), enabling the at least one wiring terminal (3) to be cooled by the cooling assembly (2).

2. The liquid-cooled charging device according to claim 1, wherein the cooling assembly (2) comprises:
a cooling cover (22); and
a cooling tank (21) having an end connected to the charging base (1) and another end connected to the cooling cover (22); and
the cooling flow channel (211) and the at least one mounting hole (212) are defined on the cooling tank (21).

3. The liquid-cooled charging device according to claim 1, wherein the cooling assembly (2) comprises:
a cooling tank (21), the cooling flow channel (211) and the at least one mounting hole (212) being disposed on the cooling tank (21);
a cooling cover (22); and
an insulation casing (23) comprising a first insulation housing (231) and at least one second insulation housing (232), the first insulation housing (231) being configured to insulate the cooling tank (21) from an external conductor, and the at least one second insulation housing (232) being configured to insulate the cooling tank (21) from the at least one wiring terminal (3),
wherein the first insulation housing (231) is arranged around the at least one second insulation housing (232) and the cooling tank (21), and the at least one second insulation housing (232) is disposed in the at least one mounting hole (212).

4. The liquid-cooled charging device according to claim 3, wherein the number of the at least one second insulation housing (232) corresponds to the number of the at least one mounting hole (212), and one of the at least one second insulation housing (232) is arranged in each of the at least one mounting hole (212).

5. The liquid-cooled charging device according to claim 2 or 3, wherein a high thermally conductive filler is disposed in a gap between the at least one wiring terminal (3) and the cooling tank (22), and the at least one wiring terminal (3) is configured to transfer heat to the cooling tank (22) through the high thermally conductive filler.

6. The liquid-cooled charging device according to claim 5, wherein the number of the at least one mounting hole (212) corresponds to the number of the at least one wiring terminal (3); and
the cooling assembly (2) has two mounting holes (212) arranged on the cooling tank (21) and spaced apart from each other, and the liquid-cooled charging device comprises two wiring terminals (3).

7. The liquid-cooled charging device according to claim 6, wherein the cooling cover (22) has a shape matching with a sectional shape of the cooling flow channel (211); and
the cooling tank (21) is sealingly connected to the cooling cover (22), enabling the cooling cover (22) to seal the cooling flow channel (211).

8. The liquid-cooled charging device according to claim 7, wherein the cooling flow channel (211) is formed along a side wall of the cooling tank (21), and has a water inlet (2111) and a water outlet (2112).

9. The liquid-cooled charging device according to claim 8, wherein the cooling cover (22) is provided with a water inlet pipe (221) and a water outlet pipe (222), the water inlet pipe (221) and the water outlet pipe (222) being in no communication with each other, the water inlet pipe (221) being in communication with the water inlet (2111), and the water outlet pipe (222) being in communication with the water outlet (2112).

10. The liquid-cooled charging device according to claim 9, wherein each of the two wiring terminals (3) comprises:
a welding portion (32); and
a connection portion (31) having an end connected to an end of the welding portion (32) and another end inserted into the charging base (1),
wherein the welding portion (32) has another end configured to be connected to an external cable.

11. The liquid-cooled charging device according to claim 10, wherein an axial direction of each of the two mounting holes (212) is consistent with each of a height direction of the cooling tank (21) and a depth direction of the cooling flow channel (211).

12. The liquid-cooled charging device according to claim 11, wherein the cooling assembly (2) is in a splayed-like shape.

13. The liquid-cooled charging device according to claim 12, wherein the side wall of the cooling tank (21) comprises a bottom plate, an inner wall (213), and an outer wall (214), an end of the inner wall (213) and an end of the outer wall (214) being both arranged at the bottom plate, the cooling flow channel (211) being defined between the inner wall (213) and the outer wall (214) and having an open end, and the cooling cover (22) being disposed at the open end of the cooling flow channel (211).

14. A charging gun, comprising the liquid-cooled charging device according to any one of claims 1 to 13.
